# EUROPEAN PATENT SPECIFICATION

(11) **EP 2 513 195 B1**
(45) Date of publication and mention of the grant of the patent: **25.06.2014**
(21) Application number: 10838031.2
(22) Date of filing: 12.01.2010
(51) Int. Cl.: C08G 65/20, C08G 65/28, C08G 65/30

(54) **INTEGRATED COPOLYETHER GLYCOL MANUFACTURING PROCESS**
INTEGRIERTES VERFAHREN ZUR COPOLYETHERGLYCOLHERSTELLUNG
PROCÉDÉ DE FABRICATION D'UN COPOLYÉTHER GLYCOL INTÉGRÉ

(30) Priority: 17.12.2009 US 287576 P
(43) Date of publication of application: 24.10.2012
(73) Proprietor: Invista Technologies S.à.r.l., 9000 St. Gallen (CH)
(72) Inventor: OSBORNE, Robert, B., Wilmington, DE 19810 (US); SUN, Qun, Wilmington, DE 19808-1106 (US); SUN, Yanhui, Wilmington, DE 19803-5318 (US); SISLER, Gregg, M., Newark, DE 19711-2418 (US); EISSMANN, Roy, N., Newark, DE 19702-2893 (US); ORLANDI, Robert, D., Landenberg, PA 19350-9395 (US)
(74) Representative: Cockerton, Bruce Roger
(86) International application number: PCT/US2010/020699
(87) International publication number: WO 2011/075177

(56) References cited:
- US-A- 4 127 513
- US-A- 4 139 567
- US-A- 4 251 654
- US-A- 4 564 671
- US-A- 4 728 722
- US-A1- 2006 276 610
- US-B1- 6 313 262
- US-B2- 6 639 041
- PECHHOLD E ET AL.: 'A new investigation of tetrahydrofuran-based polyether glycols in urethane elastomers' RUBBER CHEMISTRY AND TECHNOLOGY vol. 53, no. 5, 1980, pages 1032 - 1040, XP008156482
- ROBINSON ET AL.: 'Polyether glycols from tetrahydrofuran and ethylene oxide' URETHANE CHEM. APPL. vol. 172, 1981, ACS SYMPOSIUM SERIES, pages 197 - 203, XP008156479
- CHEN ET AL.: 'Control of molecular weight in tetrahydrofuran polymerization initiated by heteropolyacid' JOURNAL OF APPLIED POLYMER SCIENCE vol. 82, no. 2, 2001, pages 269 - 275, XP008156480

## Description

### FIELD OF THE INVENTION

The present invention relates to an improved, fully integrated continuous process for manufacturing copolyether glycols by polymerization of a reaction mixture comprising tetrahydrofuran (THF) and at least one other cyclic ether, for example an alkylene oxide (AO), in the presence of an acid catalyst and at least one compound containing reactive hydrogen atoms. More particularly, the invention relates to a fully integrated continuous process of enhanced process operability for manufacturing random copolyether glycols having a molar incorporation of alkylene oxide of from 25 mol % to 55 mol %, a number average molecular weight of from 650 dalton to 3500 dalton, a polydispersity of from 1.5 to 2.6, a low crystallinity, i.e., a very low melting point of less than room temperature, for example from about -20°C to less than about 10°C, a low viscosity of from 200 cP to 3000 cP at 40°C depending on the molecular weight and the copolymer ratio, low color of from 0 to 50 APHA, for example from about 5 to about 25 APHA, and a low OCE content of from 0.05 wt % to 3.0 wt %. Still further, herein are described random copolyether glycols having enhanced physical properties of optimal alkylene oxide incorporation, molecular weight and polydispersity, as well as reduced crystallinity, color, oligomeric cyclic ether (OCE) content, and low molecular weight, e.g., an average molecular weight of up to about 400 dalton, linear short chain glycols content.

### BACKGROUND OF THE INVENTION

Homopolymers of THF, also known as polytetramethylene ether glycols (PTMEG), are well known for use as soft segments in polyurethanes and other elastomers. These homopolymers impart superior mechanical and dynamic properties to polyurethane elastomers, fibers and other forms of final products. Random copolymers of THF and at least one other cyclic ether, also known as copolyether glycols, are known for use in similar applications, particularly where the reduced crystallinity imparted by the incorporation of the second cyclic ether may improve certain dynamic properties of a polyurethane which contains such a copolymer as a soft segment. Among the other cyclic ethers used for this purpose are ethylene oxide and propylene oxide. Copolyether glycols having a higher molar incorporation of alkylene oxide are desirable for higher polarity and hydrophilicity as well as improved dynamic properties, for example low temperature flexibility. Copolyether glycols having lower crystallinity are also desirable for use in manufacturing polyurethane and other elastomer which contains such a copolymer as a soft segment.

Copolymers of THF and other cyclic ether having normal molar incorporations of alkylene oxide are well known in the art. Their preparation is disclosed, for example, by Pruckmayr in U.S. Patent No. 4,139,567 and U.S. Patent No. 4,153,786. Such copolymers can be prepared by any of the known methods of cyclic ether polymerization, described for instance in "Polytetrahydrofuran" by P. Dreyfuss (Gordon & Breach, N.Y. 1982). Such polymerization methods include catalysis by strong Bronsted or Lewis acids, such as by heteropoly acids, as well as by perfluorosulfonic acids or acid resins or BF₃ and so on. In some instances it may be advantageous to use a polymerization promoter, such as a carboxylic acid anhydride, as disclosed in U.S. Patent No. 4,163,115. In these cases the primary polymer products are diesters, which need to be hydrolyzed in a subsequent step to obtain the desired final products, the polyether glycols.

Other methods for manufacture of copolyether glycols having normal molar incorporations of alkylene oxide are known in the art, such as for example as shown in U.S. Patent Nos. 4,192,943; 4,228,272; 4,564,671; and 4,585,592; and in published patent applications WO 03/076453 and WO 03/076494. For example, U.S. Patent No. 4,564,671 discloses a process for polymerization of THF with a 1,2-alkylene oxide in the presence of a compound containing reactive hydrogen and a fixed-bed clay catalyst in which less than 30% by weight of a mixture of 1,2-alkylene oxide and THF, and a compound containing reactive hydrogen is added to the reaction mixture, which is then recycled to the reactor. U.S. Patent No. 4,728,722 discloses such polymerization batch wise with a 1,2-alkylene oxide in the presence of compounds containing reactive hydrogen over a bleaching earth or zeolite catalyst, the 1,2-alkylene oxide being fed to the reaction mixture in such a manner that the concentration of the 1,2-alkylene oxide in the reaction mixture is kept below 2% by weight during the polymerization. U.S. Patent No. 5,268,345 discloses polymerization of THF with ethylene oxide when montmorillonite catalyst which has been regenerated by the process disclosed therein is used. U.S. Patent No. 4,192,943 discloses that copolyether glycol based on THF and alkylene oxides varies with the method of production. U.S Patent No. 4,677,231 discloses use of diluent or solvent for purification of copolyether glycol having a normal molar incorporation of alkylene oxide manufactured in a polymerization process utilizing a normal concentration of alkylene oxide as a feedstock component.

U.S. Patent No. 4,585,592 describes a process for reducing the level of OCE produced in copolyether glycols obtained by copolymerizing THF with a 1,2-alkylene oxide containing reactive hydrogen and bleaching earth catalyst. The OCE reduction process first treats the copolymer with oxygen or an oxygen containing gas at a temperature of 20°C to 100°C. The copolymer mixture is next distilled under reduced pressure at above 200°C to isolate OCE and the linear short chain copolyether glycols that accompany the OCE in the distillate. In this process both the OCE and any accompanying linear short chain copolyether glycols present represent a loss of raw materials. The copolymer product is a live polymer (i.e. subject to further polymerization or depolymerization), therefore subjecting the polymer to high temperatures in the presence of acid catalyst sites leads to depolymerization to 1,4-dioxane (DEO), THF and other side products. The THF formed is particularly detrimental to the purification process because it produces vapors that make holding the very low vacuum involved difficult.

Great Britain Patent No. 854958 disclosed a process where the acidic catalyst is a bleached earth, e.g. montmorillonite clay. Examples are shown that the copolymerization can be carried out either in a fixed bed or a batch reactor. U.S. Patent No. 4,127,513 describes a continuous process where a modified clay catalyst is said to reduce the content of OCE in the final product mixture; comparing with examples shown in aforementioned Great Britain Patent No. 854958.

U.S. Patent No. 5,962,727 describes a method for manufacturing diesters of polytetramethylene ethers by polymerization of THF with one or more alkylene oxides, in the presence of a solid acid catalyst and a molecular weight controlling agent (MWCA) consisting of a carboxylic acid with carboxylic acid anhydride. The reactor temperature control achieved takes advantage of operating at a selected reduced pressure. Sufficient cooling is provided to account for the exothermic heat of reaction by vaporizing available non-reacted THF, cooling the vapors in a condenser and returning the condensate back to the reactor. This process of heat removal is referred to as evaporative cooling. The diacetate of polytetramethylene ethers (PTMEA) are next converted to polytetramethylene ether glycols (PTMEG) in subsequent process steps.

U.S. Patent No. 4,638,097 describes a process to reduce the level of OCE in PTMEG or copolymers of THF and alkylene oxides with a mean molecular weight from 200 to 450 by using an aqueous extraction process with a hydrocarbon cosolvent. The aqueous and hydrocarbon phases are mixed together and the PTMEG or copolymers are collected from the aqueous phase and the OCE are collected from the hydrocarbon phase. The PTMEG or copolymers and the OCE are purified in their respective phases by evaporation of the solvent. The equipment required to contact and separate the phases and to recover the product and the solvent phase is complex and costly to operate because of the extensive energy expended in evaporating large solvent streams. The collected OCE with some amount of PTMEG or copolymers that may partition into the hydrocarbon phase represent a raw material yield loss for this process.

None of the above publications teach a fully-integrated continuous process of enhanced process operability for manufacturing copolyether glycols having enhanced physical properties by polymerization of a reaction mixture comprising tetrahydrofuran and at least one other cyclic ether, for example an alkylene oxide, in the presence of an acid catalyst and at least one compound containing reactive hydrogen atoms. None of the above publications teach copolyether glycols having enhanced physical properties of increased alkylene oxide incorporation, with a broader range of average molecular weight and polydispersity, as well as reduced crystallinity, color, and oligomeric cyclic ethers (OCE) content. Adjusting the methods of the above publications to produce copolyether glycols having enhanced physical properties adds complexity, processing limitations, and/or cost to the manufacturing process. For example, compared to the method described in U.S. Patent No. 5,962,727, an advantage of the present invention is that the polymer product is produced in a single reaction process step at lower investment cost. It is well recognized that high alkylene oxide content in the copolymer leads to high conversion and resulting increased viscosity in the crude product mixture, which in turn makes it very challenging to retain the catalyst in cases where heterogeneous catalyst is employed. Therefore it becomes difficult to maintain the reactor temperature in commercial scale equipment due to the substantially higher exothermic nature of the copolymerization in, for example, a continuously stirred tank reactor (CSTR) process. Most of the solid acid catalysts cited in the previous patents such as bleached earth, montmorillonite clay and so on suffer from prohibitive amount of attrition if employed in a CSTR process. The heat of copolymerization reaction involving ethylene oxide (EO) and THF includes the heat of reaction of about 23 kcal/gm mol EO reacted in addition to about 6 kcal/gm mol THF reacted. A substantially greater cooling load is thus required. Therefore, a simple, economical, integrated continuous process for copolymerization of a reaction mixture comprising tetrahydrofuran and at least one other alkylene oxide in the presence of an acid catalyst and at least one compound containing reactive hydrogen atoms to produce copolyether glycol having enhanced physical properties is needed.

### SUMMARY OF THE INVENTION

Subject-math of the present invention are continuous processes according to claims 1-13.

The present invention provides a simple, economical, fully integrated continuous process for the polymerization of THF and alkylene oxide to manufacture copolyether glycol having enhanced physical properties of increased alkylene oxide incorporation, with a broader range of average molecular weight and polydispersity, as well as reduced crystallinity, color, OCE content, and low molecular weight, e.g. an average molecular weight of up to about 400 dalton, linear short chain glycol content, which minimizes or avoids normally encountered problems associated with such a process. The process of the invention is a process according to claim 1 which comprises the steps of:
a) preparing a feed mixture comprising from 10.0 to 95.9 parts total tetrahydrofuran (THF) and from 4.0 to 50.0 parts total alkylene oxide (AO);
b) feeding the feed mixture of step a) into a polymerization reactor, for example a CSTR, such that the reactor contains from 2 parts to 15 parts of an attrition resistant solid acid catalyst, from 0.1 to 5 parts of a molecular weight control agent (MWCA) comprising a compound containing reactive hydrogen atoms, from 0 to 10 parts low molecular weight oligomers (LMWO), from 0 to 30 parts oligomeric cyclic ether (OCE), and from 0 to 75 parts recycle THF, whereby the weight ratio of the polymerization reactor mixture components, based on AO is:
   THF/AO = 1.7 to 24.0
   MWCA/AO = 0.01 to 2.0
   LMWO/AO = 0 to 2.5
   OCE/AO = 0 to 7.5;
c) polymerizing the feed mixture of step a) in the polymerization reactor of step b) at a temperature of from 40°C to 80°C, for example from about 50°C to about 75°C, and reactor pressure sufficient to maintain the reactants in the liquid phase, which is from 100 to 10,000 mmHg, for example from about 250 to about 700 mmHg, for an effective average hold time from about 1.0 to about 10.0 hours in the reactor, to produce a polymerization product mixture comprising (1) copolyether glycol having from 25 mol % to 55 mol % alkylene oxide, a number average molecular weight of from 650 dalton to 3500 dalton, a polydispersity of from 1.5 to 2.6, a low crystallinity reflected by a low melting point of below room temperature (i.e. below 23°C), for example about -20°C to less than about 10°C, a low viscosity of from 200 cP to 3000 cP @ 40°C, low color of from 0 APHA to about 50 APHA, for example, from about 5 APHA to about 25 APHA, a low OCE content of from 0.05 wt % to 3 wt %, for example, from about 0.1 wt % to about 1.0 wt %, (2) OCE, (3) at least one dimer of the AO, (4) linear short chain copolyether glycols and (5) unreacted AO, THF and MWCA;
d) recovering the polymerization product mixture of step c);
e) separating a crude copolyether glycol composition from the polymerization product mixture of step d) by stripping means comprising two stages;
f) filtering the crude copolyether glycol composition of step e) to remove high molecular weight solids to provide filtrate comprising the copolyether glycol composition, OCE, at least one dimer of the AO, linear short chain copolyether glycol and tetrahydrofuran;
g) distilling the filtrate of step f) by vacuum distillation to form a copolyether glycol composition product stream and a stream comprising OCE and short chain copolyether glycol; and
h) recovering the copolyether glycol composition product from step g).

The present invention, therefore, provides a fully integrated continuous process for manufacturing poly(tetramethylene-co-ethyleneether) glycol having enhanced physical properties of increased ethylene oxide incorporation, a broader range of average molecular weight and polydispersity, as well as reduced crystallinity, color, and OCE content.

### DETAILED DESCRIPTION OF THE INVENTION

As a result of intense research in view of the above, we have discovered an improved, fully integrated continuous process of enhanced process operability for manufacturing copolyether glycols having enhanced physical properties of optimal alkylene oxide incorporation, molecular weight and polydispersity, as well as reduced crystallinity, color, oligomeric OCE content, and low molecular weight, e.g., an average molecular weight of up to about 400 dalton, e.g., up to about 280 dalton, linear short chain glycol content.

In an embodiment of the present invention, the process comprises preparing a feed mixture comprising from 10.0 to 95.9 parts total tetrahydrofuran (THF) and from 4.0 to 50.0 parts total alkylene oxide (AO), followed by feeding the feed mixture into a polymerization reactor along with from 0.1 to 5.0 parts molecular weight control agent (MWCA), the polymerization reactor containing from 2.0 to 15.0 parts of the attrition resistant solid acid catalyst.

In another embodiment, the process comprises polymerizing the feed mixture in the polymerization reactor at a temperature of from 40°C to 80°C, for example from about 50°C to about 75°C, and reactor pressure of from 100 to 10,000 mmHg, for example from about 250 to about 700 mmHg, over an effective average hold time from 1.0 to 10.0 hours in the reactor, to produce a polymerization product mixture comprising (1) a copolyether glycol composition having from 25 mol % to 55 mol % alkylene oxide, a number average molecular weight of from 650 dalton to 3500 dalton, a polydispersity of from 1.5 to 2.6, a low crystallinity reflected by a low melting point of below room temperature (i.e. below 23°C), for example from about -20°C to less than about 10°C, a low viscosity of from 200 cP to 3000 cP @ 40°C, low color of from0 APHA to 50 APHA, for example from about 5 APHA to about 25 APHA, a low OCE content of from 0.05 wt % to 3.0 wt %, for example from about 0.1 wt % to about 1.0 wt %, (2) OCE, (3) at least one dimer of the alkylene oxide, for example 1,4-dioxane, (4) linear short chain copolyether glycols and (5) unreacted alkylene oxide, THF and MWCA, followed by recovering the copolyether glycol composition from the polymerization product mixture.

In yet another embodiment of the present invention, the unreacted alkylene oxide, THF and MWCA, dimer of the alkylene oxide, and any lower boiling components such as acetaldehyde, 2-methyl-1,3-dioxolane and so on present in the crude product mixture separated from the polymerization product mixture are removed by distillation, and the copolyether glycol fraction is, for example, further distilled by short path distillation (SPD) to remove at least a portion of the OCE and low molecular weight short chain glycols after filtering out of any solid or gel type of impurities. The OCE portion removed may optionally be recycled to the polymerization step, where it can be reincorporated into the copolyether glycol product if desired.

The term "polymerization", as used herein, unless otherwise indicated, includes the term "copolymerization" within its meaning.

The term "PTMEG", as used herein, unless otherwise indicated, means poly(tetramethylene ether glycol). PTMEG is also known as polyoxybutylene glycol.

The term "copolyether glycol", as used herein in the singular, unless otherwise indicated, means copolymers of tetrahydrofuran and at least one other alkylene oxide, which are also known as polyoxybutylene polyoxyalkylene glycols. An example of a copolyether glycol is a copolymer of tetrahydrofuran and ethylene oxide. This copolyether glycol is also known as poly(tetramethylene-co-ethyleneether) glycol. The copolymers produced in the present process are random copolymers in nature.

The term "linear short chain copolyether glycol", as used herein in the singular, unless otherwise indicated, means copolyether glycols having a molecular weight of from about 130 dalton to about 400 dalton. An example of a linear short chain copolyether glycol is HOCH₂CH₂OCH₂CH₂CH₂CH₂OH.

The term "THF", as used herein, unless otherwise indicated, means tetrahydrofuran and includes within its meaning alkyl substituted tetrahydrofuran capable of copolymerizing with THF, for example 2-methyltetrahydrofuran, 3-methyltetrahydrofuran, and 3-ethyltetrahydrofuran.

The term "alkylene oxide", as used herein, unless otherwise indicated, means a compound containing two, three or four carbon atoms in its alkylene oxide ring. The alkylene oxide can be un-substituted or substituted with, for example, linear or branched alkyl of 1 to 6 carbon atoms, or aryl which is un-substituted or substituted by alkyl and/or alkoxy of 1 or 2 carbon atoms, or halogen atoms such as chlorine or fluorine. Examples of such compounds include ethylene oxide (EO); 1,2-propylene oxide; 1,3-propylene oxide; 1,2-butylene oxide; 1,3-butylene oxide; 2,3-butylene oxide; styrene oxide; 2,2-bis-chloromethyl-1,3-propylene oxide; epichlorohydrin; perfluoroalkyl oxiranes, for example (1 H, 1H-perfluoropentyl) oxirane; and combinations thereof.

The term "molecular weight control agent" (MWCA) as used herein, unless otherwise indicated, means a compound containing reactive hydrogen atoms. Non-limiting examples of such compounds include water, 1,4-butanediol, 1,3-propanediol, ethylene glycol, PTMEG having a molecular weight of from 130 to 400 dalton, copolyether glycol having a molecular weight of from 130 to 400 dalton, and combinations thereof. An example of a suitable copolyether glycol for use as molecular weight control agent is poly(tetramethylene-co-ethyleneether) glycol having a molecular weight of from about 134 to 400 dalton.

The term "oligomeric cyclic ether" (OCE), as used herein in the singular, unless otherwise indicated, means one or more of the series of cyclic compounds comprised of constituent ether fragments derived from at least one alkylene oxide and/or THF and arranged in a random fashion within the cyclic compound. Although used herein as a singular term, OCE refers to the distribution of cyclic ethers formed during polymerization of the THF and at least one alkylene oxide and thus refers to a series of individual compounds. As used herein, the term OCE excludes the dimer of the alkylene oxide co-monomer used in the polymerization, even though such a dimer is an example of cyclic ether. For example, in the case where the alkylene oxide is ethylene oxide, two dimers of the alkylene oxide are 1,4-dioxane and 2-methyl-1,3-dioxolane. By excluding the dimer of the alkylene oxide from the term OCE, this definition of OCE may differ from that of OCE disclosed in the prior art.

In the case of copolymerization of, for example, EO and THF, OCE comprises the series of cyclic oligomeric ethers comprised of ring-opened ethylene oxide and ring-opened THF repeat units, as represented by the formula [(CH₂CH₂O)ₓ(CH₂CH₂CH₂CH₂O)_{y}]ₙ. Examples of such OCE components are shown in Table A below. Two isomers are observed for molecular weight 232. Other higher molecular weight OCE components not listed in the Table are likely formed as well.

**Table A. Individual OCE Identified in EO/THF Polymerization**

| Value for x | Value for y | Molecular weight |
|---|---|---|
| 1 | 2 | 188 |
| 1 | 3 | 260 |
| 1 | 4 | 332 |
| 1 | 5 | 404 |
| 2 | 2 | 232 |
| 2 | 3 | 304 |
| 2 | 4 | 376 |
| 3 | 1 | 204 |
| 3 | 2 | 276 |
| 3 | 3 | 348 |
| 4 | 2 | 320 |
| 4 | 3 | 392 |

The term "polydispersity" as used herein indicates the state of nonuniformity of the copolyether glycol composition product of the present process, determined as indicated hereinafter.

One embodiment of the present invention is a fully integrated continuous process for the copolymerization of feedstock comprising THF and alkylene oxide which provides a copolyether glycol composition having enhanced physical properties of optimal alkylene oxide incorporation, a broader range of molecular weight and polydispersity, as well as reduced crystallinity, color, OCE content, and low molecular weight, e.g. an average molecular weight of up to about 400 dalton, for example up to about 280 dalton, linear oligomer content. Another embodiment of the present invention is a fully integrated continuous process for the copolymerization of feedstock comprising THF and EO which provides poly(tetramethylene-co-ethyleneether) glycol having enhanced physical properties of optimal alkylene oxide incorporation, molecular weight and polydispersity, as well as reduced crystallinity, color, OCE content, and low molecular weight, e.g. an average molecular weight of up to about 400 dalton, for example up to about 280 dalton, linear oligomer content. A further embodiment of the present invention is a copolyether glycol product of this process.

The THF used as a reactant in the process of the invention can be any of those commercially available. Typically, the THF has a water content of less than about 0.03% by weight and a peroxide content of less than about 0.005% by weight. If the THF contains unsaturated compounds, their concentration should be such that they do not have a detrimental effect on the polymerization process of the present invention or the polymerization product thereof. For example, for some applications it is preferred that the copolyether glycol product of the present invention having a high molar concentration of alkylene oxide has low APHA color, such as, for example less than about 40 APHA units. Optionally, the THF can contain an oxidation inhibitor such as butylated hydroxytoluene (BHT) to prevent formation of undesirable byproducts and color. For the fully integrated continuous copolymerization process of this invention, it could be beneficial to use freshly prepared THF without the presence of BHT. If desired, one or more alkyl substituted THF compounds capable of copolymerizing with THF can be used as coreactant, in an amount from about 0.1 to about 70% by weight of the THF. Examples of such alkyl substituted THF compounds include 2-methyltetrahydrofuran, 3-methyltetrahydrofuran, 3-ethyltetrahydrofuran and combinations thereof. Suitable grades of commercially available THF are generally acceptable for use in the process. In one embodiment, the THF can be greater than 96% by weight THF, with the balance other constituents such as water and stabilizer. In another embodiment, the THF feed can be a purified THF containing more than as 99.9% by weight THF with 500 ppmw or less of organic impurities, exclusive of stabilizer.

The alkylene oxide used as a reactant in the present process, as above indicated, may be a compound containing two, three or four carbon atoms in its alkylene oxide ring. It may be selected from, for example, the group consisting of ethylene oxide; 1,2-propylene oxide; 1,3-propylene oxide; 1,2-butylene oxide; 2,3-butylene oxide; 1,3-butylene oxide and combinations thereof. The alkylene oxide may have a water content of less than about 0.03% by weight, a total aldehyde content of less than about 0.01% by weight, and an acidity (as acetic acid) of less than about 0.002% by weight. The alkylene oxide should be low in color and non-volatile residue.

If, for example, the alkylene oxide reactant is EO, it can be any of those commercially available. Preferably, the EO has a water content of less than about 0.03% by weight, a total aldehyde content of less than about 0.01 % by weight, and an acidity (as acetic acid) of less than about 0.002% by weight. The EO should be low in color and non-volatile residue.

The molecular weight control agent (MWCA) which may be useful in step b) or b') of the present process include, as non-limiting examples, water, ethylene glycol, 1,3-propanediol, 1,4-butanediol, PTMEG having a molecular weight of from about 162 dalton to about 400 dalton, copolyether glycols having a molecular weight of from about 134 dalton to about 400 dalton, and combinations thereof. An example of a suitable copolyether glycol for use as an MWCA compound containing reactive hydrogen atoms is poly(tetramethylene-co-ethyleneether) glycol having a molecular weight of from about 134 to about 400 dalton. These compounds may also be used in combination to regulate the molecular weight of the final product. Although it is generally stated that the MWCA may be water or alkanediol (see U.S. Patent No. 4,139,567) for a THF and alkylene oxide copolymerization process, it was found in the present invention that the alkanediols can only be used when relatively low concentration of alkylene oxide such as EO is in the feed, for example less than 20 wt %. We discovered that when alkanediols such as 1,4-butanediol are used in the case where high concentration of EO is in the feed, the product has an undesirable high color. Water is the preferred MWCA for obtaining the copolymers with low color when high concentration of EO, for example 20 wt % or higher is used.

The low molecular weight oligomers which may be useful in step b) or b') of the present process include, as non-limiting examples, low molecular weight PTMEG such as the T-250 grade, the short chain linear glycols resulting from the present process or combinations thereof.

The acid catalyst and is an addition resistant solid acid polymeric catalyst which contains sulfonic acid groups.

Among the suitable polymeric catalysts which contain sulfonic acid groups, optionally with or without carboxylic acid groups, are those whose polymer chains are copolymers of tetrafluoroethylene or chlorotrifluoroethylene and a perfluoroalkyl vinyl ether containing sulfonic acid group precursors (again with or without carboxylic acid groups) as disclosed in U.S. Patent Nos. 4,163,115 and 5,118,869 and as supplied commercially by E. I. du Pont de Nemours and Company under the tradename Nafion® resin catalyst. Such polymeric catalysts are also referred to as polymers comprising alpha-fluorosulfonic acids. An example of this type of catalyst for use herein is a perfluorosulfonic acid resin, i.e. it comprises a perfluorocarbon backbone and the side chain is represented by the formula -O-CF₂CF(CF₃)-O-CF₂CF₂SO₃H. Polymers of this type are disclosed in U.S. Patent No. 3,282,875 and can be made by copolymerization of tetrafluoroethylene (TFE) and the perfluorinated vinyl ether CF₂=CF-O-CF₂CF(CF₃)-O-CF₂CF₂SO₂F, perfluoro (3,6-dioxa-4-methyl-7-octenesulfonyl fluoride) (PDMOF), followed by conversion to sulfonate groups by hydrolysis of the sulfonyl fluoride groups and ion exchanged as necessary to convert them to the desired acidic form. See also U. S. Patent No. 4,139,567 for a description of perfluorosulfonic acid resin catalyst useful herein.

The polymeric heterogeneous catalysts which can be employed according to the present invention can be used in the form of powders or as shaped bodies, for example in the form of beads, cylindrical extrudates, spheres, rings, spirals, or granules.

The polymerization step c) of the present invention is carried out in the presence of from 0 to 40 wt %, of a suitable diluent or solvent. Such diluent or solvent in the polymerization step is related from inert diluents or solvents selected from the group consisting of one or a combination of linear or branched short chain hydrocarbons of from 5 to 8 carbon atoms, cyclic hydrocarbons of from 5 to 8 carbon atoms, stable oxygenates and substituted or unsubstituted aromatic hydrocarbons, said diluent or solvent having a boiling point from 40°C to 90°C. Non-limiting examples of such diluent or solvent include one or more aliphatic, cycloaliphatic, or aromatic hydrocarbons such as, for example, hexane, heptane, cyclohexane, toluene and xylene. This invention facilitates evaporative cooling of the reactor content, e.g., boiling under reaction conditions, by way of the combination of temperature and pressure.

The polymerization step of the present invention is carried out at from 40°C to 80°C, such as from 50°C to 75°C, for example from 50°C to about 72°C or from 50°C to about 65°C. Such a temperature range is suitable for OCE incorporation into the copolyether glycol product in the present process. The pressure employed is from 100 to 10,000 mmHg, such as from 250 to 700 mmHg, for example from about 350 to about 500 mmHg, depending on the diluent or solvent used. The reaction temperature in the polymerization reactor, e.g., a CSTR, is conveniently controlled by evaporative cooling at the pressure indicated by boiling both THF and EO off the surface under vacuum, while condensing the vapor in external water cooled condensers for recycle to the reactor.

To avoid the formation of peroxides, the polymerization step of the present process may be conducted under an inert gas atmosphere. Non-limiting examples of suitable inert gases for use herein include nitrogen, carbon dioxide, or the noble gases.

The polymerization process step of the present invention is carried out continuously to maintain consistency in the products, with one or more other steps of the process being carried out continuously or batch wise, i.e. the entire feed or part of the feed can be prepared in a large batch and polymerized continuously until the batch is consumed. Similarly, the product could be stored and processed after the batch is completely processed in the polymerization reactor.

The polymerization reaction can be carried out in conventional reactors or reactor assemblies suitable for continuous processes in a suspension or fixed-bed mode, for example in loop reactors or stirred reactors in the case of a suspension process or in tube reactors or fixed-bed reactors in the case of a fixed-bed process. A continually stirred tank reactor (CSTR) is desirable due to the need for good mixing in the present process, especially when the products are produced in a single pass mode.

In such a continuous polymerization reactor apparatus, the catalyst can, if desired, be pretreated before or after it has been introduced into the reactor(s). Examples of catalyst pretreatments include drying by means of gases, for example air or nitrogen, which have been heated to 80-200°C, or, in the case of supported catalysts comprising a catalytically active amount of at least one oxygen-containing molybdenum and/or tungsten compound, pretreatment with a reducing agent as is disclosed in DE 19641481. The catalyst can also be used without pretreatment.

In a fixed-bed process mode, the polymerization reactor apparatus can be operated in the upflow mode, that is, the reaction mixture is conveyed from the bottom upward, or in the downflow mode, that is, the reaction mixture is conveyed through the reactor from the top downward.

The polymerization reactor can be operated using a single pass without internal recirculation of product, such as in a CSTR. The polymerization reactor can also be operated in the circulation mode, i.e. the polymerization mixture leaving the reactor is circulated such as when a fixed-bed reactor is used. In the circulation mode, the ratio of recycle to feed is less than 100:1, for example less than 50:1, or for example less than 40:1.

Feedstock can be introduced to the polymerization reactor using delivery systems common in current engineering practice either batch wise or continuously. A preferred method of feed delivery combines, for example EO and THF, as a liquid mixed feed to the reactor, for example a CSTR, in continuous fashion along with the other feed ingredients. The compound containing reactive hydrogen and any recycled THF or OCE streams are metered independently or in ratio-fashion to the reactor. Part of or an entire THF-rich stream separated downstream of the polymerization reactor can be recycled and used in place of part of the neat THF feed. The range of alkylene oxide, e.g. EO, in the feed may be from 4 to 50 wt %, for example from 4 to about 35 wt %. The range of THF in the feed is from 10 to 95.9 wt %, for example from about 30 to 95.9 wt %, such as from about 60 to 95.9 wt %. The range of recycled THF or OCE in the feed is from 0 (prior to any recycle of THF or OCE stream separated downstream) to about 20 wt %, for example from about 0 to about 15 wt %. The range of linear short chain copolyether glycols in the feed is from 0 (prior to any recycle of OCE stream separated downstream) to about 10 wt %, for example from 0 to about 5 wt %. The range of the compound containing reactive hydrogen may be from about 0.1 to about 5 wt % as water, for example from about 0.1 to about 2 wt %. The range of the diluent or solvent in the feed is from greater than 0 to 40 wt %, for example from about 10 to 30 wt %.

If the polymerization is carried out in the suspension mode, the major part of the polymerization catalyst requires separation from the polymerization product mixture, i.e. retained in the polymerization reactor, in the work-up of the output from the polymerization step, for example by internal filtration, decantation or centrifugation. In other words, the resulting polymerization product mixture may be passed directly to the step of separation of THF and alkylene oxide dimer from the polymerization product mixture, or optionally it may be treated first to remove any catalyst fines or downstream products of the catalyst before being passed to the separation step.

The molar incorporation of alkylene oxide, e.g., EO, in the copolyether glycol product from the polymerization reaction step of this invention is at least 25 mol %, for example from 25 to about 55 mol %. The concentration of the copolyether glycol in the polymerization reaction step product stream is from 25 to less than 75 wt %, e.g., from about 35 to about 70 wt %.

In the embodiment of the present process involving a step of separating a majority of the THF and alkylene oxide dimer from the polymerization product mixture it can be carried out either batchwise or continuously. By majority of THF and dimer in this step we mean from at least about 95 wt % to about 100 wt %, for example at least about 98 wt %. The initial separation is performed by distillation which separates the majority of the unreacted THF, the unreacted alkylene oxide, then alkylene oxide dimers and isomerization products, low boilers such as acetaldehyde and alkylene oxide, mid boilers such as 2,3-dihydrofuran, 2-butenal and 2-methyl-1,3-dioxolane, and high boilers such as 1,4-dioxane with trace oligomeric cyclic ethers are thus removed from the polymerization product mixture. The separation of the THF in this step is carried out in a plurality of distillation steps, for example two or three distillation steps followed by a stripping step. It is advantageous to carry out the distillation steps under different pressures.

The configuration of the separation operation is dependent on the alkylene oxide, the compound(s) containing reactive hydrogen atoms used in the polymerization step, and the diluent if used. Depending on the separation task, possible distillation apparatuses are appropriate columns or evaporators such as falling film evaporators or thin film evaporators. It may also be advantageous to use tray or packed columns.

Following are disclosed in more detail various non-limiting embodiments for the separation of THF and alkylene oxide dimer from the polymerization product mixture when using THF, EO, and water in the polymerization step.

The removal of the major part of the unreacted THF at nearly atmospheric pressure (for example, at 450-900 mm Hg) may be carried out in a continuously operated circulating flash evaporator. The polymerization product mixture, optionally having been filtered to remove any catalyst fines or downstream products of the catalyst, is fed into a flash evaporator via a heated circulation stream into the side near the top of the evaporator where it flashes. The polymerization product mixture from this embodiment, e.g., step c') above, usually has a THF content of from about 5 wt % to about 40 wt %, depending upon the operating temperature and pressure selected. The 1,4-dioxane is generally present from about 0.1 wt % to about 5 wt %. The water content is generally not more than about 2500 ppm, the alkylene oxide, e.g., EO, content is from about 200 ppm to about 5000 ppm, and the 2-methyl-1,3-dioxolane concentration is from about 10 ppm to about 2200 ppm, usually from about 100 ppm to about 2000 ppm. Other compounds such as ethylene glycol may be so low as to be undetectable and as high as about 2000 ppm, more typically from about 100 ppm to less than about 1000 ppm, and 1,4-butanediol may be so low as to be undetectable and as high as about 2000 ppm, more typically less than about 1000 ppm, e.g., from about 30 ppm to about 300 ppm, are also present. At a circulating temperature at the top of from about 100°C to about 160°C and a temperature at the bottom of from about 100°C to about 200°C, for example from about 100°C to about 120°C, the major part of the water, unreacted alkylene oxide, e.g., EO, and acetaldehyde in admixture with THF and 1,4-dioxane are distilled off via the top. The THF fraction obtained as distillate is condensed and all or some of it, such as for example at least about 99 %, can be subsequently returned to the polymerization step after purification, for example by distillation. The crude product mixture obtained as distillation residue at the bottom of the evaporator comprises the copolyether glycol of the present invention, OCE, and a very small amount of THF, dimer of the alkylene oxide, e.g., 1,4-dioxane, the diluent and other low boilers.

In an embodiment, the unreacted THF distillate is purified, for example by distillation, before returning the purified THF to the polymerization step. Non-limiting examples of side products that may be removed from the THF in this purification step include acetaldehyde, 2-methyl-1,3-dioxotane and 1,4-dioxane.

Distillation to separate out a purified THF from the low/mid/high boiling impurities (relative to THF) may be accomplished by feeding the mixture to a low tray of a distillation column, removing low and high boiling fractions from the top and bottom of column respectively and taking off purified THF as a side stream. THF purity is increased from 95-99% (depending on alkylene oxide content) to greater than about 99.7% purity. Major impurities in the final refined THF may include 2-methyl-1,3-dioxolane and trace 1,4-dioxane. Low boiling acetaldehyde and unreacted alkylene oxide are generally less than about 100 ppm. This stream can then be recycled as THF feed to the reactor with minimal impact on quality gauged by color response. The overall feed recipe can be adjusted to account for recycle of molecular weight control agent (usually water) to maintain steady polymer molecular weight production.

As an alternative, the removal of the major part of the unreacted THF at atmospheric pressure can be carried out in a thin film evaporator or distillation column, for example a falling film evaporator with circulation, which is operated at from about 100°C to about 200°C, for example from about 120°C to about 180°C. The composition of the THF fraction obtained as distillate and that of the crude product mixture obtained as distillation residue correspond to those described above.

The distillation residue obtained from the first distillation step is subsequently freed of most of the residual THF under reduced pressure, for example in a second circulating flash evaporator operating at about 100 °C to about 150°C (for example at about 120°C) and from about 80 mm Hg to about 160 mm Hg (for example at about 130 mm Hg) with the circulation temperature from about 2°C to about 5°C higher than the evaporator temperature. Crude product leaving from the second recovery step generally contains less than about 10 ppm EO, less than about 50 ppm water, less than about 100 ppm of 2-methyl-1,3-dioxolane, less than about 1000 ppm 1,4-dioxane, and less than about 0.5 wt % THF. All or some of the THF fraction obtained as distillate, which comprises predominantly THF, such as for example at least about 98 to 99 %, can be returned to the polymerization step after purification in a distillation column to 99.7 to 99.9% THF. The purified diluent can also, if desired, be returned back to the polymerization step in a similar manner as that of THF.

To reduce the remaining THF and dimer, e.g., 1,4-dioxane, a third step using ultra low vacuum, for example less than 3 mm Hg, or inert gas stripping, for example with nitrogen, can be employed. The third step could use thin film evaporators, wiped film evaporators, disc and donut contactors, or packed columns. For example, when using nitrogen stripping in a packed column with nitrogen at about 170°C fed at the bottom and crude product at about 120 °C fed at the top, the crude product leaving the bottom of the column might have only dropped by about 1 to 2°C, for example to about 118°C to 119°C. The EO and water content would generally be less than about 1 ppm, the 2-methyl-1,3-dioxolane concentration less than about 3 ppm, the THF concentration less than about 40 ppm, and the 1,4-dioxane concentration less than about 250 ppm. The left over diluent will depend on the boiling point of the compound, for example when 1,4-dioxane is used as the diluent, it would be less than 250 ppm. Other high boiling compounds like ethylene glycol and 1,4-butanediol would be slightly reduced but would mainly remain in the crude product.

After a majority of the THF and the alkylene oxide dimer have been separated from the polymerization product mixture to produce a crude product mixture comprising OCE, the copolyether glycol of the present invention, and linear short chain copolyether glycol, the crude product mixture may be treated to remove any catalyst fines or downstream products of the catalyst before being passed to the step of separation of at least a portion of the OCE from the crude product mixture.

Either or both of the polymerization product mixture and the crude product mixture may be treated to remove any catalyst fines or downstream products of the catalyst which may result, for example, from attrition of or leaching of the catalyst during pretreatment or during polymerization. Examples of these include finely divided, suspended or emulsified abraded catalyst comprising unchanged catalyst, the catalyst support and/or the active catalyst component. In the case of supported catalysts comprising an oxidic support material to which oxygen-containing molybdenum or tungsten compounds or mixtures of such compounds have been applied as catalytically active compounds, the abraded material is accordingly unchanged catalyst, support material and/or active oxygen-containing molybdenum or tungsten components. Downstream products of the catalyst are, for example, dissolved cations or anions of the active components and their counter ions, for example tungsten or molybdenum cations or molybdate or tungstate anions. In the case of ion exchangers containing sulfonic acid groups, for example Nation® resin catalyst, the downstream product can include low molecular weight polymers and/or sulfonic acids. In the case of the sulfate-doped metal oxides, the downstream product can include sulfuric acid and/or metal cations or anions and their counter ions.

Although the amount of such catalyst and/or downstream products of the catalyst is small and generally does not exceed 0.1 % by weight, for example 0.01 % by weight, based on the output from the polymerization step, this material should be removed or it would otherwise remain in the copolyether glycol and change the specification data and thereby the properties of the copolyether glycol product.

The catalyst and/or downstream products of the catalyst can be separated from the polymerization product mixture and/or the crude product mixture by physical separation methods. Examples of physical separation methods include filtration and sorption. Examples of filtration include ultrafiltration with or without a filter aid such as rice hull ash, activated carbon and diatomaceous earth such as Celpure® brand diatomaceous earth. Examples of physical separation by sorption include adsorption on solid adsorbents, for example activated carbon, and/or by means of ion exchangers, for example molecular sieves having pore sizes of from 3 to 10 angstroms. Adsorption on solid adsorbents can also be combined with neutralization using acids or bases. Filtration also removes other insoluble impurities in the product from the feed, for example high molecular weight polyethylene glycol (PEG) in EO, or from the process or equipment, for example rust and other foreign materials.

Separating at least a portion, such as from about 2 to about 30 wt %, for example from about 4 to about 20 wt %, of the OCE from the crude product mixture, and from about 1 to about 10 wt %, for example from about 1 to about 8 wt %, of the linear short chain copolyether glycol from the crude product mixture, to produce an OCE stream comprising OCE and linear short chain copolyether glycol, and a product stream comprising from about 95.0 to about 99.9 wt %, for example from about 98.0 to about 99.8 wt %, copolyether glycol can be carried out in practice by distillation using a conventional reduced pressure distillation apparatus. For example, distillation can be carried out batchwise from a batch distillation apparatus, without rectification. Short-path distillation (SPD) devices, for example conventional thin film evaporators with mechanical surface distribution or automatic distribution, are advantageous. In the case of the thin film evaporators, the continuous procedure is generally preferred, whereas distillation from a batch distillation apparatus is carried out batchwise in most cases. Flash evaporators are also suitable for separating off at least a portion of the OCE. In these apparatuses, the required evaporation energy is introduced into the product in the form of sensible heat, after which the product is let down into a suitable vessel under reduced pressure. During this procedure, the OCE and short chain glycols present therein are vaporized. The distillation can be reinforced by additional stripping with an inert gas, such as nitrogen or superheated steam. For this purpose, available thin film evaporators, falling film evaporators and/or short path distillation units are useful.

In this separation OCE and low molecular weight copolyether glycols having a mean molecular weight of from about 200 to about 400 dalton are separated in at least one distillation step at a pressure of from about 0.1 to about 130 µbar, for example from about 1 to about 90 µbar, or for example from about 10 to about 70 µbar, and at a temperature of from about 170°C to about 250°C, for example from about 180°C to about 220°C, and copolyether glycol having a high molar incorporation of alkylene oxide, a mean molecular weight of from 650 dalton to 3500 dalton and a viscosity of from 200 cP to about 3000 cP is isolated.

In one embodiment of the invention, the OCE may optionally be separated and recycled to the polymerization reaction zone. The recycled OCE generally includes a fraction (for example from about 10 to about 30 wt %) of short chain EO-THF oligomeric glycols having a molecular weight up to about 250 dalton.

A diluent or solvent may be present in the polymerization reaction mixture for the present process, such as in a CSTR, and especially when a heterogeneous catalyst is employed. In such case, the viscosity of the system is reduced and this facilitates retention of the catalyst in the reactor. The diluent or solvent for use herein may be selected to have a suitable boiling point so that reaction heat can be efficiently carried out by way of evaporative cooling by using the unreacted reagents and the inert diluent or solvent through an external condenser.

The following Examples demonstrate the present invention and its capability for use. The invention is capable of other and different embodiments, and its several details are capable of modifications in various apparent respects. Accordingly, the Examples are to be regarded as illustrative in nature and non-limiting.

### Materials

THF was obtained from ChemCentral Corporation. EO was purchased from ARC Specialty Products and was used without further purification. The deionized water used as molecular weight control agent (MWCA) was produced with a Millipore water purification system. The other MWCA materials, for example 1,4-butanediol, 1,3-propanediol and ethylene glycol, were purchased from Aldrich Chemical. The NR50 Nafion^{®} perfluorinated sulfonic acid resin catalyst was obtained from E. I. du Pont de Nemours and Company, Wilmington, Delaware, USA. The filter aid was purchased from Aldrich Chemical. All of the process water was deionized.

### Product Processing and Characterization

The conversion to copolymers is defined by the weight percent of non-volatiles in the crude product mixture collected from the reactor exit, which was measured by a vacuum oven (130°C and about 200 mm Hg) removal of the volatiles in the crude product mixture.

The overall conversion was also determined by distillation of the unreacted THF, alkylene oxide and relatively volatile by-products, e.g., 1,4-dioxane, 2-methyl-1,3-dioxolane and so on, under reduced pressure and 100°C. The percent of the residue left in the Rotavap flask compared with the starting reaction mixture was the overall percent conversion.

After Rotavap distillation, the crude polymer mixture was filtered with Celpure^{®} 300 filter aid on a Buckner funnel which was heated by steam.

After purification by filtration, the product mixtures were further distilled at around 200°C under <0.3 mm Hg pressure with a short path distillation unit to remove the low molecular weight oligomers which comprised a combination of linear and cyclic copolymers. The final products were characterized with NMR for molecular weight as well as the incorporation of the alkylene oxide.

Both molecular weight and percent incorporation of alkylene oxide were measured by ¹H NMR equivalent to ASTM method D4875. Molecular weight of the final glycol may also be determined by titration of hydroxyl end groups per INVISTA potentiometric titration, using toluene sulfonyl isocyanate to react with hydroxyl ends, followed by titration with t-butyl ammonium hydroxide (equivalent to ASTM method E222).

The short chain glycol and OCE contents in the crude polymer mixtures and final polymer products were determined by gas chromatography using a DB1701 column of 5 meter length with an FID detector. Temperature programming was commenced at 50°C, held for 2 minutes at 50°C, then ramped at 20°C/minute to 250°C, held at 250°C for 22.5 minutes, then reduced to 50°C. Sample dilution was 1:4 by weight with toluene; and sample injection size was 1 microliter.

The APHA colors of the products were determined by Hunter tristimulus color.

The polydispersity was determined by GPC, which was performed with an HP 1090 series II liquid chromatography with a Waters Ultrastyragel 500 A column. THF was used as eluant. Polystyrene and PTMEG standards were used for calibration. The polydispersity was calculated as the ratio between the Mw/Mn.

The viscosities of the final products were determined using ASTM method D4878 at 40°C (Cannon-Fenske tubes) and expressed in centipoise (cP).

### EXAMPLES

All parts and percentages are by weight unless otherwise indicated.

### Catalyst Preconditioning

Before use in the polymerization experiments described below, 90 grams (dry basis) of Nafion^{®} perfluorosulfonic acid resin catalyst and 14 grams of water are loaded into a jacketed one liter stainless steel CSTR reactor system. The catalyst is conditioned by feeding 4.8 wt % EO and 0.24 wt % water in THF for 24 hours at 58°C with a 1.5 hour hold time. The catalyst is treated with the same feed for 18 hours at 60°C with a 1.2 hour hold time. The feed is then discontinued and the reactor system is allowed to cool to about 30°C. The catalyst is unloaded, filtered, rinsed with THF and then dried on a Buchner funnel at ambient conditions under the pull of house vacuum. After drying, the catalyst contains 13.5 wt % volatiles as determined by oven drying the catalyst at 130°C.

### Reactor

In the experiments for these examples, a jacketed 1 liter stainless steel reactor 96 mm ID by 168 mm tall containing three baffles 165 mm long and 7.9 mm wide with three agitator flights mounted on a 9.5 mm shaft is loaded with 90 grams of the pretreated Nafion^{®} perfluorosulfonic resin catalyst. The bottom agitator flight is a down pumping four blade unit with 45° blade angle that is 60 mm OD and 15.9 mm high. The upper two flights are identical 2 blades down pumping units with 45° blade angle, 47.6 mm OD, 12.7 mm deep mounted 90° from each other and approximately 64 mm and 127 mm above the bottom flight. The reactor is fed through a 6.4 mm stainless tube reduced to 3.2 mm that ends approximately 3 mm above the bottom agitator flight. The temperature is measured by two separate 3.2 mm thermocouples, one located about 29 mm from the top and one about 29 mm from the bottom. Product is removed under system pressure through a 6.4 mm tube via a filter near the top.

### Example 1

A feed composition consisting of 13.9 wt % EO, 1.8 wt % butanediol as MWCA and balanced with THF is premixed in a stainless steel container. The feed is fed through the above described reactor under conditions that the hold time in the reactor is 2.25 hours; the reactor temperature is 61.9°C and with agitator speed set at 500 rpm. The conversion of the feed is 50.0 wt % and the OCE fraction is 11.5 wt % of the 50 wt % crude polymer. The final product has a molecular weight of 2613 g/mol, a polydispersity of 2.40, EO incorporation of 38.2 mol % and a color of 14 APHA.

### Example 2

A feed composition consisting of 19.2 wt % EO, 1.29 wt % deionized water as MWCA and balanced with THF is premixed in a stainless steel container. The feed is fed through the above described reactor under conditions that the hold time in the reactor is 2.50 hours; the reactor temperature is 58.0°C and with agitator speed set at 500 rpm. The conversion of the feed is 49.9 wt %
and the OCE fraction is 9.1 wt %. The final product has a molecular weight of 941 g/mol, a polydispersity of 1.60, EO incorporation of 49.4 mol % and a color of 8 APHA.

### Example 3

A feed composition consisting of 27.0 wt % EO, 0.41 wt % deionized water as MWCA and balanced with THF is premixed in a stainless steel container. The feed is fed through the above described reactor under conditions that the hold time in the reactor is 3.25 hours; the reactor temperature is 62.1°C and with agitator speed set at 500 rpm. The conversion of the feed is 69.5 wt % and the OCE fraction is 6.5 wt %. The final product has a molecular weight of 3277 g/mol, a polydispersity of 2.00, EO incorporation of 49.5 mol % and a color of 18 APHA.

### Example 4

A feed composition consisting of 12.5 wt % EO, 0.62 wt % deionized water as MWCA and balanced with THF is premixed in a stainless steel container. The feed is fed through the above described reactor under conditions that the hold time in the reactor is 2.0 hours; the reactor temperature is 58.0°C and with agitator speed set at 500 rpm. The conversion of the feed is 43.0 wt % and the OCE fraction is 10.3 wt %. The final product has a molecular weight of 1492 g/mol, a polydispersity of 1.98, EO incorporation of 40.4 mol % and a color of 10 APHA.

### Example 5

An experiment with purified recycle THF is conducted by creating a feed mixture composition with 27.0 wt % EO and 0.535 wt % deionized water in THF. This feed is fed through the above described reactor using a 5.1 hour hold time with 7 wt % catalyst loading at 64°C to make copolymer with molecular weight of 2500 dalton and with 48-50 mol % EO product composition. Production is lined out using virgin fresh THF in the feed mixture with 67.8 % conversion to give a copolymer product with molecular weight of 2520 dalton and color of 17 APHA.

### Comparative Example 1

Following the experiment of Example 5, unreacted monomers (primarily THF) recovered from the Example 5 product composition are recycled directly to the reactor feed mixture without refinement in four batch cycles constituting 19 reactor turnovers. This results in an increase in impurity content at each cycle. Reactor content color increases steadily in parallel with the impurity content of the integrated feed, to a final product color of 106 APHA. Feed impurities include about 220 ppm acetaldehyde, 3 ppm 2,3-DHF, 3470 ppm 2-methyl-1,3-dioxolane, and 2.10 % 1, 4-dioxane for the high color reaction.

### Comparative Example 2

A feed composition consisting of 27.0 wt % EO, 2.0 wt % butanediol as MWCA and balanced with THF is premixed in a stainless steel container. The feed is fed through the above described reactor under conditions that the hold time in the reactor is 3.25 hours; the reactor temperature is 62.5 °C and with agitator speed set at 500 rpm. The conversion of the feed is 68.9 wt % and the OCE fraction is 6.5 wt %. The final product has a molecular weight of 3328 g/mol, a polydispersity of 2.21, EO incorporation of 49.4 mol % and a color of 457 APHA.

It is observed from the results of the above Comparative Example 2 that butanediol is not a very effective MWCA when a high concentration, i.e. greater than 20 wt %, of EO is in the feed mixture, leading to high product color. The results of Comparative Example 1 indicate that recycled THF preferably should be purified to remove by-products such as 2-methyl-1,3-dioxolane before recycling to produce good quality products. The data clearly show that water, e.g. deionized water, is a more suitable MWCA for making copolyols with very high levels of EO incorporation, i.e. greater than 40 mol %; and that the recycle THF should be treated, for example by distillation, to limit the 2-methyl-1,3-dioxolane to below 200 ppm, and so on.

### Example 6

Following the Comparative Example 2 above, the unreacted monomer stream for use in the reactor feed mixture is refined on a 25-tray side draw column to produce a recycle THF material at 99.9 % purity. The feed mixture is adjusted to maintain the EO:THF ratio to make copolymer having a molecular weight of about 2500 g/mol, 48-50 mol % EO content with reduced impurities (4 ppm acetaldehyde, 0 ppm DHF, 110 ppm 2-methyl-1,3-dioxolane and 9 ppm 1,4-dioxane). Reactor content color for this experiment drops rapidly over four cycles of batch THF refining (33 reactor turnovers) to a product having a molecular weight of 2507 g/mol and color of 38 APHA.

### Example 7

Glycol with molecular weight of 2500 g/mol, 38 mol % EO incorporation, and containing 13.3 wt % OCE is pre-stripped in a wiped film evaporator (WFE) to less than 0.1 wt % combined THF and dioxane. The stripped crude glycol is then preheated to 175 °C and flashed at 4 mm Hg into a degassing chamber to remove additional lights. The degassed stream is fed continuously to a short path distillation unit operating at 200 °C and 30 mm Hg. The hold time at high temperature is minimized to protect the polymer. The OCE content is collected from the short path distillation unit internal condenser. The residual glycol contained 0.3 wt % OCE with unchanged 2500 g/mol molecular weight and 6 APHA product color.

When numerical lower limits and numerical upper limits are listed herein, ranges from any lower limit to any upper limit are contemplated.

While the illustrative embodiments of the invention have been described with particularity, it will be understood that various other modifications will be apparent to and may be readily made by those skilled in the art.

## Claims

1. A continuous process for manufacturing a copolyether glycol composition product having from 25 mol % to 55 mol % alkylene oxide, a number average molecular weight of from 650 dalton to 3500 dalton, a polydispersity of from 1.5 to 2.6, a low crystallinity that is reflected by a low melting point of below room temperature, said room temperature being 23 °C, a viscosity of from 200 cP to 3000 cP at 40 °C, low color of from 0 APHA to 50 APHA, and a low OCE content of from 0.05 wt % to 3.0 wt %, comprising the steps of:
a) preparing a feed mixture comprising from 10 to 95.9 parts total tetrahydrofuran (THF) and from 4 to 50 parts total alkylene oxide (AO);
b) feeding the feed mixture of step a) into a polymerization reactor such that the reactor contains from 2 parts to 15 parts of an attrition resistant solid acid polymeric catalyst which contains sulfonic acid groups, from 0.1 to 5 parts of a molecular weight control agent (MWCA) comprising a compound containing reactive hydrogen atoms, from 0 to 10 parts low molecular weight oligomers (LMWO), from 0 to 30 parts oligomeric cyclic ether (OCE), from 0 to 75 parts recycle THF, and from 0 to 40 wt % added diluent or solvent, said diluent or solvent being selected from the group consisting of one or a combination of linear or branched short chain hydrocarbons of from 5 to 8 carbon atoms, cyclic hydrocarbons of from 5 to 8 carbon atoms, stable oxygenates and substituted or unsubstituted aromatic hydrocarbons, said diluent or solvent having a boiling point of from 40 °C to 90 °C, whereby the weight ratio of the polymerization reactor components, based on AO is:
THF/AO = 1.7 to 24.0
MWCA/AO = 0.01 to 2.0
LMWO/AO = 0 to 2.5
OGE/AO = 0 to 7.5;
c) polymerizing the feed mixture of step a) in the polymerization reactor of step b) at a temperature of from 40 °C to 80 °C and reactor pressure of from 100 to 10,000 mm Hg to produce a polymerization product mixture,
d) recovering the polymerization product mixture of step c) comprising from 25 to less than 75 wt % of the copolyether glycol composition, oligomeric cyclic ether, at least one dimer of the alkylene oxide, linear short chain copolyether glycol, tetrahydrofuran, and high molecular weight solids;
e) separating a crude copolyether glycol composition from the polymerization product mixture of step d) by stripping means comprising two stages, wherein a distillate comprising tetrahydrofuran and dimer of the alkylene oxide is separated from the two stages and followed by a further step of distillation to obtain a distillate comprising substantially pure THF, wherein the substantially pure THF is provided as recycle to step b);
f) filtering the crude copolyether glycol composition of step e) to remove high molecular weight solids to provide filtrate comprising the copolyether glycol composition, oligomeric cyclic ether, at least one dimer of the alkylene oxide, linear short chain copolyether glycol and tetrahydrofuran;
g) distilling the filtrate of step f) by vacuum distillation to form a copolyether glycol composition product stream comprising the copolyether glycol composition, at least one dimer of the alkylene oxide and tetrahydrofuran, and a stream comprising oligomeric cyclic ether and short chain copolyether glycol; and
h) recovering the copolyether glycol composition product from step g),
wherein:
(i) number average molecular weight and percent incorporation of alkylene oxide (AO) are determined by ¹H NMR according to ASTM method D4875;
(ii) polydispersity is determined by GPC;
(iii) viscosity is determined using ASTM method D4878 at 40 °C; and
(iv) APHA color is determined by tristimulus colorimetry.

2. The process of claim 1 wherein the alkylene oxide is selected from the group consisting of ethylene oxide; 1,2-propylene oxide; 1,3-propylene oxide; 1,2-butylene oxide; 2,3-butylene oxide; 1,3-butylene oxide; and combinations thereof.

3. The process of claim 1 wherein the tetrahydrofuran further comprises at least one alkyltetrahydrofuran selected from the group consisting of 2-methyltetrahydrofuran, 3-methyltetrahydrofuran, 3-ethyltetrahydrofuran and combinations thereof.

4. The process of claim 1 wherein the compound containing reactive hydrogen atoms is selected from the group consisting of water, ethylene glycol, 1,3-propanediol, 1,4-butanediol, poly(tetramethylene ether) glycol having a molecular weight of from 130 dalton to 400 dalton, copolyether glycols having a molecular weight of from 130 dalton to 400 dalton, and combinations thereof.

5. The process of claim 1 wherein the compound containing reactive hydrogen atoms comprises water.

6. The process of claim 1 containing an added diluent or solvent in the polymerization reactor of from 10 to 30 wt %, said diluent or solvent.

7. The process of claim 1 wherein the polymeric catalyst comprises a perfluorosulfonic acid resin.

8. The process of claim 1 wherein the polymerization reactor is a continually stirred tank reactor.

9. The process of claim 1 wherein the polymerization reaction temperature is maintained essentially uniformly throughout the polymerization reactor by vaporizing tetrahydrofuran and alkylene oxide off the surface under vacuum at pressure from 100 to 10,000 mm Hg while condensing the vapor in one or more external water cooled condensers for recycle to the reactor.

10. The process of claim 1 wherein the alkylene oxide comprises ethylene oxide, the compound containing reactive hydrogen atoms comprises water, the acid catalyst comprises polymeric catalyst comprising perfluorosulfonic acid resin, and the polymerization reactor is a continually stirred tank reactor.

11. The process of claim 1 wherein the polymerization reaction conditions in step c) include a temperature of from 50 °C to 75 °C and reactor pressure of from 250 to 700 mmHg.

12. The process of claim 1 wherein the polymerization step c) is conducted under an inert gas atmosphere, said inert gas being selected from the group consisting of nitrogen, carbon dioxide, a noble gas or combination thereof.

## Patentansprüche

1. Kontinuierliches Verfahren zum Herstellen eines Copolyetherglykolzusammensetzungsprodukts mit 25 Mol.-% bis 55 Mol.-% Alkylenoxid, einem zahlengemittelten Molekulargewicht von 650 Dalton bis 3500 Dalton, einer Polydispersität von 1,5 bis 2,6, einer niedrigen Kristallinität, die sich durch einen niedrigen Schmelzpunkt unter Raumtemperatur wiederspiegelt, wobei die Raumtemperatur 23 °C ist, einer Viskosität von 200 cPs bis 3000 cPs bei 40 °C, einer niedrigen Farbe von 0 APHA bis 50 APHA und einem niedrigen OCE-Gehalt von 0,05 Gew.-% bis 3,0 Gew.-%, das die Schritte umfasst:
a) Herstellen einer Zuführmischung, die 10 bis 95,9 Teile Gesamt-Tetrahydrofuran (THF) und 4 bis 50 Teile Gesamt-Alkylenoxid (AO) umfasst;
b) Zuführen der Zuführmischung aus Schritt (a) in einen Polymerisationsreaktor, so dass der Reaktor 2 Teile bis 15 Teile eines abnutzungsresistenten festen sauren polymeren Katalysators, der Sulfonsäuregruppen enthält, 0,1 bis 5 Teile eines Molekulargewichtsteuermittels (MWCA), das eine Verbindung umfasst, die reaktive Wasserstoffatome enthält, 0 bis 10 Teile Oligomere mit niedrigem Molekulargewicht (LMWO), 0 bis 30 Teile oligomeren cyclischen Ether (OCE), 0 bis 75 Teile Rückführungs-THF und 0 bis 40 Gew.-% hinzugefügtes Verdünnungsmittel oder Lösungsmittel enthält, wobei das Verdünnungsmittel oder Lösungsmittel aus der Gruppe ausgewählt ist, bestehend aus einem oder einer Kombination von linearen oder verzweigten kurzkettigen Kohlenwasserstoffen mit 5 bis 8 Kohlenstoffatomen, cyclischen Kohlenwasserstoffen mit 5 bis 8 Kohlenstoffatomen, stabilen Oxygenaten und substituierten oder unsubstituierten aromatischen Kohlenwasserstoffen, wobei das Verdünnungsmittel oder Lösungsmittel einen Siedepunkt von 40 °C bis 90 °C aufweist, wobei das Gewichtsverhältnis der Polymerisationsreaktorkomponenten bezogen auf AO ist:
THF/AO = 1,7 bis 24,0
MWCA/AO = 0,01 bis 2,0
LMWO/AO = 0 bis 2,5
OGE/AO = 0 bis 7,5
c) Polymerisieren der Zuführmischung aus Schritt a) im Polymerisationsreaktor von Schritt b) bei einer Temperatur von 40 °C bis 80 °C und einem Reaktordruck von 100 bis 10.000 mmHg, um eine Polymerisationsproduktmischung herzustellen,
d) Gewinnen der Polymerisationsproduktmischung aus Schritt c), die 25 bis weniger als 75 Gew-% der Copolyetherglykolzusammensetzung, oligomeren cyclischen Ether, zumindest ein Dimer des Alkylenoxid, lineares kurzkettiges Copolyetherglykol, Tetrahydrofuran und Feststoffe mit hohem Molekulargewicht umfasst;
e) Trennen einer rohen Copolyetherglykolzusammensetzung von der Polymerisationsproduktmischung aus Schritt d) mithilfe eines Strippmittels, das zwei Stufen umfasst, wobei ein Destillat, das Tetrahydrofuran und ein Dimer des Alkylenoxids umfasst, aus den zwei Stufen getrennt wird, worauf ein weiterer Destillationsschritt erfolgt, um ein Destillat zu erhalten, das im Wesentlichen reines THF umfasst, wobei das im Wesentlichen reine THF als Rückführung von Schritt b) bereitgestellt wird;
f) Filtrieren der rohen Copolyetherglykolzusammensetzung von Schritt e), um Feststoffe mit hohem Molekulargewicht zu entfernen, um ein Filtrat bereitzustellen, das die Copolyetherglykolzusammensetzung, oligomeren cyclischen Ether, zumindest ein Dimer des Alkylenoxids, linearen kurzkettigen Copolyetherglykol und Tetrahydrofuran umfasst;
g) Destillieren des Filtrats aus Schritt f) durch Vakuumdestillation, um einen Copolyetherglykolzusammensetzungsprodukt-Strom, der die Copolyetherglykolzusammensetzung, zumindest ein Dimer des Alkylenoxids und Tetrahydrofuran umfasst, und einen Strom zu bilden, der oligomeren cyclischen Ether und kurzkettiges Copolyetherglykol umfasst; und
h) Gewinnen des Copolyetherglykolzusammensetzungsprodukts aus Schritt g), wobei
(i) das zahlengemittelte Molekulargewicht und die prozentuale Integration von Alkylenoxid (AO) durch ¹H-NMR gemäß dem ASTM-Verfahren D4875 bestimmt werden;
(ii) die Polydispersität durch GPC bestimmt wird;
(iii) die Viskosität unter Verwendung des ASTM-Verfahrens D4878 bei 40 °C bestimmt wird; und
(iv) die APHA-Farbe mittels Tristimulus-Kolorimetrie bestimmt wird.

2. Verfahren nach Anspruch 1, wobei das Alkylenoxid aus der Gruppe ausgewählt ist, bestehend aus Ethylenoxid; 1,2-Propylenoxid; 1,3-Propylenoxid; 1,2-Butylenoxid; 2,3-Butylenoxid; 1,3-Butylenoxid; und Kombinationen davon.

3. Verfahren nach Anspruch 1, wobei das Tetrahydrofuran darüber hinaus zumindest ein Alkyltetrahydrofuran umfasst, das aus der Gruppe ausgewählt ist, bestehend aus 2-Methyltetrahydrofuran, 3-Methyltetrahydrofuran, 3-Ethyltetrahydrofuran und Kombinationen davon.

4. Verfahren nach Anspruch 1, wobei die Verbindung, die reaktive Wasserstoffatome enthält, aus der Gruppe ausgewählt ist, bestehend aus Wasser, Ethylenglykol, 1,3-Propandiol, 1,4-Butandiol, Poly(tetramethylenether)glykol mit einem Molekulargewicht von 130 Dalton bis 400 Dalton, Copolyetherglykolen mit einem Molekulargewicht von 130 Dalton bis 400 Dalton und Kombinationen davon.

5. Verfahren nach Anspruch 1, wobei die Verbindung, die reaktive Wasserstoffatome enthält, Wasser umfasst.

6. Verfahren nach Anspruch 1, das ein hinzugefügtes Verdünnungsmittel oder Lösungsmittel im Polymerisationsreaktor von 10 bis 30 Gew.-% des Verdünnungsmittels oder Lösungsmittels enthält.

7. Verfahren nach Anspruch 1, wobei der polymere Katalysator ein Perfluorsulfonsäureharz umfasst.

8. Verfahren nach Anspruch 1, wobei der Polymerisationsreaktor ein kontinuierlich gerührter Kesselreaktor ist.

9. Verfahren nach Anspruch 1, wobei die Polymerisationsreaktionstemperatur im gesamten Polymerisationsreaktor im Wesentlichen einheitlich gehalten wird, indem Tetrahydrofuran und Alkylenoxid unter Vakuum bei einem Druck von 100 bis 10.000 mmHg von der Oberfläche verdampft werden, während der Dampf in einem oder mehreren mit Wasser gekühlten externen Kondensatoren für eine Rückführung in den Reaktor kondensiert wird.

10. Verfahren nach Anspruch 1, wobei das Alkylenoxid Ethylenoxid umfasst, wobei die Verbindung, die reaktive Wasserstoffatome umfasst, Wasser umfasst, wobei der saure Katalysator einen polymeren Katalysator umfasst, der Perfluorsulfonsäureharz umfasst, und wobei der Polymerisationsreaktor ein kontinuierlich gerührter Kesselreaktor ist.

11. Verfahren nach Anspruch 1, wobei die Polymerisationsreaktionsbedingungen in Schritt c) eine Temperatur von 50 °C bis 75 °C und einen Reaktordruck von 250 bis 700 mmHg beinhalten.

12. Verfahren nach Anspruch 1, wobei der Polymerisationsschritt c) unter Inertgasatmosphäre durchgeführt wird, wobei das Inertgas aus der Gruppe ausgewählt ist, bestehend aus Stickstoff, Kohlendioxid, einem Edelgas oder Kombinationen davon.

## Revendications

1. Procédé continu pour fabriquer un produit de composition de copolyéther-glycol ayant de 25 % en moles à 55 % en moles d'oxyde d'alkylène, un poids moléculaire moyen en nombre de 650 dalton à 3500 dalton, une polydispersité de 1,5 à 2,6, une cristallinité faible qui se traduit par un point de fusion bas au-dessous de la température ambiante, ladite température ambiante étant de 23 °C, une viscosité de 200 cP à 3000 cP à 40 °C, une couleur faible de 0 APHA à 50 APHA, et une teneur en OCE faible de 0,05 % en poids à 3,0 % en poids, comprenant les étapes de :
a) préparation d'un mélange de matières premières comprenant de 10 à 95,9 parties du tétrahydrofurane (THF) total et de 4 à 50 parties de l'oxyde d'alkylène (AO) total ;
b) l'alimentation du mélange de matières premières de l'étape a) dans un réacteur de polymérisation de sorte que le réacteur contienne de 2 parties à 15 parties d'un catalyseur polymère solide acide résistant à l'attrition qui contient des groupes acide sulfonique, de 0,1 à 5 parties d'un agent de contrôle du poids moléculaire (MWCA) comprenant un composé contenant des atomes d'hydrogène réactifs, de 0 à 10 parties d'oligomères de faible poids moléculaire (LMWO), de 0 à 30 parties d'éther cyclique oligomère (OCE), de 0 à 75 parties de THF recyclé, et de 0 à 40 % en poids d'ajout de diluant ou solvant, ledit diluant ou solvant étant choisi dans le groupe constitué d'un ou d'une combinaison d'hydrocarbures à chaîne courte linéaires ou ramifiés de 5 à 8 atomes de carbone, d'hydrocarbures cycliques de 5 à 8 atomes de carbone, de composés oxygénés stables et d'hydrocarbures aromatiques substitués ou non substitués, ledit diluant ou solvant ayant un point d'ébullition de 40 °C à 90 °C, de sorte que le rapport en poids des composants dans le réacteur de polymérisation, sur la base d'AO soit :
THF/AO = 1,7 à 24,0
MWCA/AO = 0,01 à 2,0
LMWO/AO = 0 à 2,5
OCE/AO = 0 à 7,5 ;
c) polymérisation du mélange de matières premières de l'étape a) dans le réacteur de polymérisation de l'étape b) à une température de 40 °C à 80 °C et une pression de réacteur de 100 à 10 000 mm Hg de manière à produire un mélange de produits de polymérisation,
d) récupération du mélange de produits de polymérisation de l'étape c) comprenant de 25 à moins de 75 % en poids de la composition de copolyéther-glycol, d'éther cyclique oligomère, d'au moins un dimère de l'oxyde d'alkylène, de copolyéther-glycol linéaire à chaîne courte, de tétrahydrofurane, et de solides de poids moléculaire élevé ;
e) séparation d'une composition de copolyéther-glycol brute à partir du mélange de produits de polymérisation de l'étape d) par des moyens de distillation comprenant deux étages, dans lesquels un distillat comprenant du tétrahydrofurane et un dimère de l'oxyde d'alkylène est séparé à partir des deux étages et suivie par une étape de distillation supplémentaire pour obtenir un distillat comprenant du THF sensiblement pur, le THF sensiblement pur étant fourni en tant que recyclage vers l'étape b) ;
f) filtration de la composition de copolyéther-glycol brute de l'étape e) pour éliminer les solides de poids moléculaire élevé pour produire un filtrat comprenant la composition de copolyéther-glycol, l'éther cyclique oligomère, au moins un dimère de l'oxyde d'alkylène, le copolyéther-glycol linéaire à chaîne courte et le tétrahydrofurane ;
g) distillation du filtrat de l'étape f) par distillation sous vide pour former un flux de produit de composition de copolyéther-glycol comprenant la composition de copolyéther-glycol, au moins un dimère de l'oxyde d'alkylène et le tétrahydrofurane, et un flux comprenant l'éther cyclique oligomère et le copolyéther-glycol à chaîne courte ; et
h) récupération du produit de composition de copolyéther-glycol de l'étape g), où :
(i) le poids moléculaire moyen en nombre et le pourcentage d'incorporation d'oxyde d'alkylène (AO) sont déterminés par RMN ¹H selon la méthode ASTM D4875 ;
(ii) la polydispersité est déterminée par GPC ;
(iii) la viscosité est déterminée en utilisant la méthode ASTM D4878 à 40 °C ; et
(iv) la couleur APHA est déterminée par colorimétrie tristimulus.

2. Procédé de la revendication 1 dans lequel l'oxyde d'alkylène est choisi dans le groupe constitué de l'oxyde d'éthylène ; l'oxyde de 1,2-propylène ; l'oxyde de 1,3-propylène ; l'oxyde de 1,2-butylène ; l'oxyde de 2,3-butylène ; l'oxyde de 1,3-butylène ; et des combinaisons de ceux-ci.

3. Procédé de la revendication 1 dans lequel le tétrahydrofurane comprend en outre au moins un alkyltétrahydrofurane choisi dans le groupe constitué des 2-méthyltétrahydrofurane, 3-méthyltétrahydrofurane, 3-éthyltétrahydrofurane et des combinaisons de ceux-ci.

4. Procédé de la revendication 1 dans lequel le composé contenant des atomes d'hydrogène réactifs est choisi dans le groupe constitué de l'eau, l'éthylèneglycol, le 1,3-propanediol, le 1,4-butanediol, un poly(éther tétraméthylénique)glycol ayant un poids moléculaire de 130 dalton à 400 dalton, des copolyéther-glycols ayant un poids moléculaire de 130 dalton à 400 dalton, et des combinaisons de ceux-ci.

5. Procédé de la revendication 1 dans lequel le composé contenant des atomes d'hydrogène réactifs comprend l'eau.

6. Procédé de la revendication 1 contenant un diluant ou solvant ajouté dans le réacteur de polymérisation de 10 à 30 % en poids dudit diluant ou solvant.

7. Procédé de la revendication 1 dans lequel le catalyseur polymère comprend une résine d'acide perfluorosulfonique.

8. Procédé de la revendication 1 dans lequel le réacteur de polymérisation est un réacteur à cuve agitée en continu.

9. Procédé de la revendication 1 dans lequel la température de réaction de polymérisation est maintenue pratiquement uniforme dans l'ensemble du réacteur de polymérisation par vaporisation de tétrahydrofurane et d'oxyde d'alkylène sur la surface sous vide à une pression de 100 à 10 000 mm Hg en condensant la vapeur dans un ou plusieurs condenseurs externes refroidis par l'eau pour recyclage vers le réacteur.

10. Procédé de la revendication 1 dans lequel l'oxyde d'alkylène comprend l'oxyde d'éthylène, le composé contenant des atomes d'hydrogène réactifs comprend l'eau, le catalyseur acide comprend un catalyseur polymère comprenant une résine d'acide perfluorosulfonique, et le réacteur de polymérisation est un réacteur à cuve agitée en continu.

11. Procédé de la revendication 1 dans lequel les conditions de réaction de polymérisation dans l'étape c) comprennent une température de 50 °C à 75 °C et une pression de réacteur de 250 à 700 mmHg.

12. Procédé de la revendication 1 dans lequel l'étape de polymérisation c) est conduite sous une atmosphère de gaz inerte, ledit gaz inerte étant choisi dans le groupe constitué de l'azote, le dioxyde de carbone, un gaz noble ou une combinaison de ceux-ci.
